(19) Europäisches Patentamt
European Patent Office
Office européen des brevets

(11) **EP 3 261 221 B1**

(12) **EUROPÄISCHE PATENTSCHRIFT**

(45) Veröffentlichungstag und Bekanntmachung des Hinweises auf die Patenterteilung:
**04.05.2022   Patentblatt 2022/18**

(21) Anmeldenummer: **17175705.7**

(22) Anmeldetag: **13.06.2017**

(51) Internationale Patentklassifikation (IPC):
**H02K 1/27** *(2022.01)*        **H02K 1/28** *(2006.01)*
**H02K 15/03** *(2006.01)*

(52) Gemeinsame Patentklassifikation (CPC):
**H02K 1/2733; H02K 1/278; H02K 15/03**

(54) **ROTOR FÜR EINE ELEKTRISCHE MASCHINE, ELEKTRISCHE MASCHINE MIT DEM ROTOR UND HERSTELLUNGSVERFAHREN FÜR DEN ROTOR**

ROTOR FOR AN ELECTRIC MACHINE, ELECTRIC MACHINE COMPRISING THE ROTOR AND METHOD FOR PRODUCING THE ROTOR

ROTOR POUR UNE MACHINE ÉLECTRIQUE, MACHINE ÉLECTRIQUE COMPRENANT LE ROTOR ET PROCÉDÉ DE FABRICATION DU ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016   DE 102016211308**

(43) Veröffentlichungstag der Anmeldung:
**27.12.2017   Patentblatt 2017/52**

(73) Patentinhaber: **Robert Bosch GmbH**
**70442 Stuttgart (DE)**

(72) Erfinder:
• **Derhardt, Steffen**
  **70839 Gerlingen (DE)**
• **Paweletz, Anton**
  **70736 Fellbach (DE)**

(56) Entgegenhaltungen:
**EP-A1- 1 826 884        WO-A1-2007/072536**
**US-B1- 6 376 958**

**Beschreibung**

Stand der Technik

Rotoren von Hochgeschwindigkeitsmaschinen beinhalten in der Regel hoch energetische Seltene-Erden Permanentmagnete. Solche Hochgeschwindigkeitsmaschinen werden typischerweise in einem Drehzahlbereich von mehr als hunderttausend Umdrehungen pro Minute angewendet.

Aus der US 4,433,261 A ist eine Synchronmaschine vom Permanentmagnettyp mit einem Rotor bekannt. Auf einer Rotorwelle sind dabei Seitenplatten aus einem nicht-magnetischen Material, wie Edelstahl, in einem derartigen Abstand durch Schweißen befestigt, dass säulenförmige Permanentmagnete derart dazwischen eingesetzt werden können, dass eine Verschiebung der Permanentmagnete in Umfangsrichtung verhindert wird. Die Magnete werden mit der Oberfläche der Welle und den Seitenplatten verklebt. Des Weiteren wird ein Harz in den Zwischenraum zwischen den Magneten eingespritzt. Anschließend wird der Außenumfang der so montierten Magnete mit Glasfasern oder Kohlefasern umwickelt.

Durch die WO 2007/072536 A1 ist eine elektrische Maschine mit einem Rotor bekannt, wobei die elektrische Maschine einen Stator aufweist, welcher um den Rotor angeordnet ist, wobei der Rotor wenigstens ein Magnetelement und eine Hülse aufweist, welche derart ausgebildet ist, dass das wenigstens eine Magnetelement in die Hülse einführbar ist. Die elektrische Maschine weist eine zweigeteilte Welle mit einem ersten und zweiten Wellenteil auf, wobei der Rotor zwischen den beiden Wellenteilen angeordnet und mit den beiden Wellenteilen fest verbunden ist. Das wenigstens eine in der Hülse aufgenommene Magnetelement bildet eine Durchführung zum Hindurchführen einer Verbindungsstange, der elektrischen Maschine durch die Hülse hindurch Die elektrische Maschine weist ein erstes und zweites Laufrad und die Verbindungsstange auf, welche durch die Durchführung des Rotors und durch Durchführungen der beiden Wellenteile hindurchgeführt ist, wobei das erste und zweite Laufrad an den Enden der Verbindungsstange dem jeweils zugeordneten ersten und zweiten Wellenteil gegenüberliegend angeordnet sind und wobei die beiden Laufräder fest mit der Verbindungsstange und dem Rotor durch Spannelemente verbunden sind. Bei der bekannten elektrischen Maschine können unter Umständen Probleme bei Ausdehnung der Wellenteile bei Erwärmung auftreten, so dass der Einsatzbereich der elektrischen Maschine eingeschränkt ist.

Offenbarung der Erfindung

Die Erfindung offenbart eine elektrische Maschine mit den Merkmalen des Patentanspruchs 1.

Demgemäß ist eine elektrische Maschine mit einem Rotor vorgesehen, die einen Stator aufweist, welcher um den Rotor angeordnet ist, wobei der Rotor wenigstens ein Magnetelement und eine Hülse aufweist, welche derart ausgebildet ist, dass das wenigstens eine Magnetelement in die Hülse einführbar ist. Die elektrische Maschine weist eine zweigeteilte Welle mit einem ersten und zweiten Wellenteil auf, wobei der Rotor zwischen den beiden Wellenteilen angeordnet und mit den beiden Wellenteilen fest verbunden ist. Das wenigstens eine in der Hülse aufgenommene Magnetelement bildet eine Durchführung zum Hindurchführen einer Verbindungsstange, der elektrischen Maschine durch die Hülse hindurch .

Die elektrische Maschine weist ein erstes und zweites Laufrad und die Verbindungsstange auf, welche durch die Durchführung des Rotors und durch Durchführungen der beiden Wellenteile hindurchgeführt ist, wobei das erste und zweite Laufrad an den Enden der Verbindungsstange dem jeweils zugeordneten ersten und zweiten Wellenteil gegenüberliegend angeordnet sind und wobei die beiden Laufräder fest mit der Verbindungsstange und dem Rotor durch Spannelemente verbunden sind. Zwischen wenigstens einem der Wellenteile und seinem zugeordneten Laufrad ist eine thermische Kompensationseinrichtung vorgesehen zur Kompensation einer Ausdehnung der ersten und zweiten Wellenteile und des dazwischen angeordneten Rotors in axialer Richtung.

Vorteile der Erfindung

Die vorliegende Erfindung schafft eine elektrische Maschine bei der eine thermische Kompensation der Ausdehnung der Wellenteile erfolgt. Damit können solche elektrische Maschinen in einem viel breiteren Temperaturbereich arbeiten.

Bevorzugte Weiterbildungen sind Gegenstand der Unteransprüche.

Das wenigstens eine Magnetelement kann in Ausführungsbeispielen der Erfindung als ein Magnetstab, eine Magnetscheibe oder eine Magnethülse ausgebildet sein. Der Magnetstab erlaubt dabei eine segmentierte Bauweise, während eine Magnetscheibe oder eine Magnethülse besonders einfach zu montieren sind.

Das wenigstens eine Magnetelement ist in einer erfindungsgemäßen Ausführungsform radial oder diametral magnetisiert ausgebildet, je nach Funktion und Einsatzzweck. Grundsätzlich ist auch eine Kombination von Magnetelementen denkbar von denen wenigstens ein Magnetelement radial und wenigstens ein weiteres Magnetelement diametral magnetisiert ist.

Die Hülse kann in einer erfindungsgemäßen Ausführungsform aus Metall, Kunststoff und/oder faserverstärktem Kunststoff ausgebildet sein und beispielsweise einen konstanten Innendurchmesser, wenigstens eine Nut oder wenigstens einen Absatz oder eine Abstufung zur Aufnahme des wenigstens einen Magnetelements aufweisen. Die Metallhülse ist dabei vorzugsweise aus einem nichtmagnetischen oder schwachmagnetischen Metall oder Metalllegierung. Die Kunststoffhülse kann wiederum z.B. durch Spritzgießen sehr einfach und kostengünstig hergestellt werden. Eine faserverstärkte Kunststoffhülse stellt wiederum ein stabiles und leichtes Bauteil dar. Ein Absatz in der Hülse hat den Vorteil, dass auf eine zusätzliche Trägerplatte zwischen dem Magnetelement und dem Absatz auch verzichtet werden kann. Des Weiteren kann die Nut mit einer segmentierten Bauweise des wenigstens einen Magnetelements und falls vorhanden, mit einer segmentierten Bauweise einer Trägerplatte gekoppelt werden.

An der Innenumfangsfläche der Hülse und/oder an der Außenumfangsfläche des wenigstens einen Magnetelements kann in einer erfindungsgemäßen Ausführungsform ein zumindest teilweise elastisches Ausgleichselement vorgesehen werden. Das Ausgleichselement hat den Vorteil, dass es für einen gleichmäßigen Kräfteausgleich bzw. für eine gleichmäßige Verteilung der Vorspannkraft der Hülse auf das wenigstens eine Magnetelement in radialer Richtung sorgt, um die durch das wenigstens eine Magnetelement erzeugte Fliehkräfte beim Drehen der Welle abzufangen. Das Ausgleichselement ist beispielsweise eine Ausgleichsschicht z.B. aus Harz, welches nach dem Aushärten in der Hülse zumindest teilweise elastisch ist.

An einem oder beiden Enden des wenigstens einen Magnetelementes der Hülse kann in einer weiteren Ausführungsform der Erfindung jeweils eine Trägerplatte vorgesehen sein.

Die Trägerplatte bildet dabei eine axiale Aufnahme für das wenigstens eine Magnetelement. Dabei kann die Trägerplatte segmentiert oder als Scheibe bzw. Hülse mit einer Durchgangsbohrung ausgebildet sein zum Durchführen der Verbindungsstange der elektrischen Maschine.

In einer anderen Ausführungsform der Erfindung ist die Trägerplatte aus einem nicht magnetischen Material oder einer nicht magnetischen Materialkombination hergestellt, beispielsweise aus Stahl, Kunststoff und/oder faserverstärktem Kunststoff.

Die Hülse ist in einer Ausführungsform mit einem Ende eines Wellenteils der elektrischen Maschine beispielsweise durch Aufschrumpfen oder Aufpressen auf das Wellenteil fest verbunden.

Kurze Beschreibung der Zeichnungen

Weitere Merkmale und Vorteile der vorliegenden Erfindung werden nachfolgend anhand der Figuren erläutert. Es zeigen:

Fig. 1   eine schematische Schnittansicht einer nicht erfindungsgemäßen elektrischen Maschine mit einem Rotor;

Fig. 2   eine schematische Schnittansicht einer erfindungsgemäßen elektrischen Maschine mit einem Rotor; und

Fig. 3   ein Flussdiagramm zur Herstellung des Rotors der elektrischen Maschine gemäß der Fig. 2.

Ausführungsformen der Erfindung

Die vorliegende Erfindung betrifft eine elektrische Maschine, insbesondere Hochgeschwindigkeitsmaschine, die in einem variablen Betriebszyklus betrieben werden kann und hohen Temperaturschwankungen ausgesetzt ist. Die Rotoren solcher elektrischen Maschinen bestehen in der Regel aus hoch energetische Permanentmagneten aus seltenen Erden.

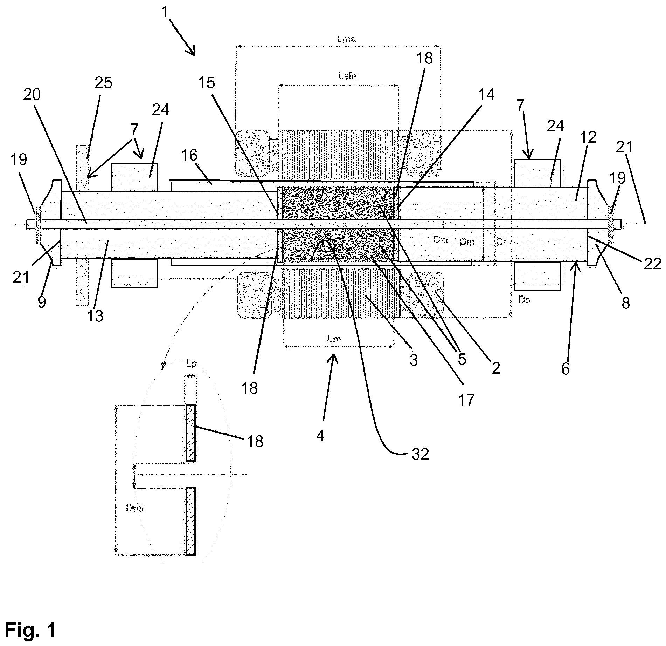

In Fig. 1 ist eine Grundanordnung einer nicht erfindungsgemäßen elektrischen Maschine 1, z.B. einer Hochgeschwindigkeitsmaschine, mit einem Rotor gezeigt, welche im Nachfolgenden noch erläutert wird.

Fig. 1 zeigt zunächst die Grundanordnung von elektromagnetischen, aktiven Komponenten der beispielhaften elektrischen Maschine 1, wie dem Stator 2 mit Wicklungen 3, dem Rotor 4 mit Magnetelementen 5, die Welle 6 und die Lagerelemente 7 des Rotors 4. Die Darstellung in Fig. 1 ist dabei rein schematisch, stark vereinfacht und nicht maßstäblich.

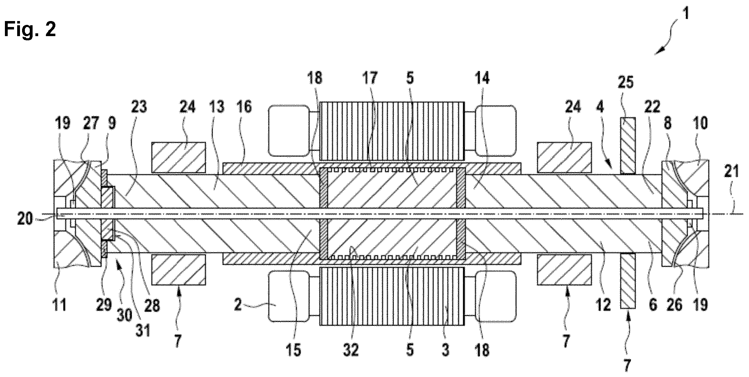

Die Maschine 1 mit dem Rotor bildet in dem in Fig. 1 gezeigten Ausführungsbeispiel z.B. den Antrieb eines zweistufigen Kompressors oder Verdichters. Der Rotor ist aber weder auf Hochgeschwindigkeitsmaschinen, oder Kompressoren bzw. Verdichter noch auf die spezielle Ausführungsform der elektrischen Maschine in Fig. 1 sowie nachfolgender Fig. 2 beschränkt, sondern kann bei jeder elektrischen Maschine eingesetzt werden, welche geeignet ist mit dem Rotor ausgerüstet zu werden.

Die Laufräder 8 und 9 von beiden Verdichterstufen der elektrischen Maschine 1 sind auf gegenüberliegenden Seiten des Motors angeordnet. Ihre Gegenstücke, die Gehäuse oder Voluten sind in Fig. 1 im Gegensatz zu nachfolgender Fig. 2 nicht dargestellt.

Wie in Fig. 1 gezeigt ist, weist der Rotor der elektrischen Maschine 1 eine zweiteilige Welle 6 oder zweiteilige Motorwelle mit einem ersten Wellenteil 12 und einem zweiten Wellenteil 13 auf. Die beiden ersten und zweiten Wellenteile 12 und 13 sind auf einer gemeinsamen Verbindungsstange 20 angeordnet, deren Längsachse gleichzeitig auch die Rotationsachse 21 der Welle 6 und ihrer Wellenteile 12, 13 und des dazwischen angeordneten Rotors bildet. An dem jeweiligen äußeren Ende 22, 23 des ersten und zweiten Wellenteils 12 bzw. 13 ist in dem in Fig. 1 gezeigten Ausführungsbeispiel jeweils das Laufrad oder sog. Impeller 8 bzw. 9 angeordnet.

Zur Ausbildung des Rotors 4 für eine elektrische Maschine 1, wie sie in Fig. 1 beispielhaft gezeigt ist, sind zwischen den beiden inneren Enden 14, 15 der Wellenteile 12 und 13 ein oder mehrere Magnetelemente 5 um die Verbindungsstange 20 angeordnet. Beispielsweise können ein oder mehrere Magnetelemente als Stäbe oder Magnetstäbe radial um die Verbindungsstange 20 angeordnet werden und/oder in Form einer oder mehrerer Magnethülsen oder Magnetscheiben in axiale Richtung hintereinander auf der Verbindungsstange 20 angeordnet. Die Magnetelemente 5 sind dabei insbesondere Permanentmagnete, beispielsweise Permanentmagnete aus seltenen Erden.

Des Weiteren ist eine Rotor-Verbindungshülse oder Hülse 16, z.B. eine zylindrische Hülse, vorgesehen, die sich zumindest über einen jeweiligen Abschnitt der inneren Enden 14, 15 des ersten und zweiten Wellenteils 12 und 13 und über die dazwischen angeordneten Magnetelemente 5 erstreckt. Die Hülse 16 dient dabei als radiale Aufnahme für die Magnetelemente 5.

Die Hülse 16 ist hierbei zumindest mit den beiden inneren Enden 14, 15 oder Endabschnitten der Wellenteile 12 und 13 der Welle 6 in Fig. 1 fest verbunden. Dazu ist die Hülse 16 beispielsweise auf das jeweilige innere Ende 14, 15 oder inneren Endabschnitt des ersten und zweiten Wellenteils 12 und 13 aufgepresst oder mittels thermischen Schrumpfens daran befestigt. Es kann jede Form der Befestigung vorgesehen werden, welche geeignet ist die Hülse 16 an dem jeweiligen Wellenteil 12 bzw. 13 zu befestigen.

Außen um die Hülse 16 ist der Stator 2 mit seinen Statorwicklungen 3 angeordnet.

Wahlweise zusätzlich kann, wie in dem Beispiel in Fig. 1 gezeigt ist, ein elastisches Ausgleichselement 17 zwischen der Innenseite der Hülse 16 und der Außenseite des oder der Magnetelemente 5 vorgesehen sein. Das elastische Ausgleichselement 17 ist beispielsweise wenigstens eine elastische Ausgleichs- oder Verbindungsschicht. Das Material des Ausgleichselements 17 bzw. der in Fig. 1 gezeigten Ausgleichs- oder Verbindungsschicht ist vorzugsweise elektrisch nicht leitend. Als Material für das Ausgleichselement kann beispielsweise ein Harz verwendet werden, wobei das Harz vorzugsweise in ausgehärtetem Zustand zumindest teilweise elastisch ist. Es kann jedes andere Material oder jede andere Materialkombination vorgesehen werden, die geeignet ist die Magnetelemente 5 und die Hülse 16 der elektrischen Maschine 1 zu verbinden.

Die Ausgleichs- oder Verbindungsschicht weist elastische und dämpfende Eigenschaften auf. Des Weiteren sorgt die Ausgleichs- oder Verbindungsschicht als eine mechanische Ausgleichs- oder Verbindungsschicht für einen gleichmäßigen Kräfteausgleich bzw. für eine gleichmäßige Verteilung der Vorspannkraft der Hülse 16 auf die Magnetelemente 5 in radialer Richtung, um die durch die Magnetelemente 5 erzeugten Fliehkräfte beim Drehen der Welle 6 abzufangen. Die Ausgleichs- oder Verbindungsschicht kann bei der Montage beispielsweise in einem halbflüssigen Zustand auf der Innenseite der Hülse 16 und/oder der Außenseite der Magnetelemente 5 aufgebracht und z.B. nach einem Aufpressen der Hülse 16 thermisch behandelt werden, um auszuhärten. Die Wiedererweichungstemperatur des Materials der Ausgleichs- oder Verbindungsschicht ist dabei ausreichend hoch und insbesondere ausreichend höher als die maximale Betriebstemperatur der Magnetelemente 5 und der Hülse 16, so dass die Ausgleichs-oder Verbindungsschicht im Betrieb der elektrischen Maschine 1 nicht ungewollt weich wird. Das Vorsehen der Ausgleichs- oder Verbindungsschicht hat den Vorteil, dass sie auch einen Toleranzausgleich zwischen den hochtolerierten metallischen Elementen, hier insbesondere den Wellenteilen 12 und 13 und der Hülse 16, sowie den Magnetelementen 5 erlaubt, bei deren Fertigung entweder keine genauen Toleranzen möglich sind oder die Nachfolgeprozesse, wie z.B. Schleifen usw., sehr teuer oder unter Umständen sogar gesundheitsschädlich sind. Dies kann beispielsweise bei Magnetelementen 5 der Fall sein, welche auf Neodymium - Seltene-Erden basieren. Die Fliehkräfte der Magnetelemente 5 können durch das Ausgleichselement 17, z.B. die in Fig. 1 gezeigte Ausgleichs- oder Verbindungsschicht, in einem breiten Betriebsbereich der Drehzahl und der Temperatur neutralisiert bzw. geeignet kompensiert werden.

Des Weiteren ist wahlweise zusätzlich eine Trägerplatte 18 zwischen dem jeweiligen inneren Enden 14, 15 des Wellenteils 12 bzw. 13 und den gegenüberliegenden Enden der Magnetelemente 5 vorgesehen. Die Trägerplatten 18 werden dabei auf die Verbindungsstange 20 aufgeschoben. Die Trägerplatten 18 an beiden Enden der Magnetelemente 5 dienen dabei als axiale Aufnahmen für die Magnetelemente 5.

Im Falle einer segmentierten Bauweise der Magnetelemente 5, bei welcher beispielsweise wenigstens zwei Magnetelemente 5 z.B. in Form von Magnetstäben, radial um einen Außenumfangsabschnitt der Verbindungsstange 20 angeordnet werden, kann die Hülse 16 an ihrem Innenumfang beispielsweise mit einer umlaufenden Nut 32 ausgebildet sein. In diesem Fall werden zunächst die einzelnen Magnetstäbe in die Hülse 16 eingeführt und in die Nut 32 eingesetzt. Die Magnetelemente 5 bilden dabei mit ihren Innenumfangsflächen eine Durchgangsöffnung, durch welche anschließend die Verbindungsstange 20 hindurchgeführt werden kann. Dabei können die Nut 32 auf ihrer Innenumfangsfläche und/oder die Magnetelemente 5 auf ihrer Außenumfangsfläche wahlweise zusätzlich mit dem Ausgleichselement 17 versehen sein. Die Trägerplatten 18 an den beiden Enden der Magnetelemente 5 sind im Falle der Nut 32 ebenfalls segmentiert ausgebildet, um in die Nut 32 an den beiden Enden der Magnetelemente 5 eingesetzt zu werden, wie in Fig. 1 gezeigt ist.

In einer alternativen Form können auch nur die Magnetelemente in der Nut 32 ohne die Trägerplatten 18 oder bei zwei Trägerplatten nur eine Trägerplatte in der Nut 32 aufgenommen werden. In diesem Fall kann die Trägerplatte 18, welche nicht in der Nut 32 aufgenommen wird, stattdessen auch scheibenförmig ausgebildet sein und einen Außendurchmesser aufweisen, welcher an den Innendurchmesser der Hülse 16 angepasst ist, so dass die Trägerplatte 18 in die Hülse 16 eingeschoben und an dem zugeordneten Ende der Magnetelemente 5 außerhalb der Nut 32 positioniert werden kann.

Bei wenigstens einem hülsenförmigen oder scheibenförmigen Magnetelement 5 kann zum Einschieben des Magnetelements 5 in die Hülse 16 die Hülse 16 zumindest auf einer Einführungsseite mit einem Innendurchmesser ausgebildet werden, welcher an den Außendurchmesser des hülsenförmiges oder scheibenförmiges Magnetelements 5 derart angepasst ist, dass das Magnetelement 5 in die Hülse 16 eingeschoben werden kann. Die Hülse 16 kann dabei im Inneren mit einem Absatz ausgebildet sein, bis zu dem das Magnetelement 5 einschiebbar ist. Dabei kann das optionale Ausgleichelement 17 auf der Innenumfangsfläche der Hülse 17 und/oder auf der Außenumfangsfläche des Magnetelements zumindest im Bereich der Endposition des Magnetelements innerhalb der Hülse vorgesehen werden.

Das jeweilige zuvor mit Bezug auf verschiedene Ausführungsbeispiele beschriebene Magnetelement 5 kann radial oder diamaterial magnetisiert ausgebildet sein, je nach Funktion und Einsatzzweck.

Wie in Fig. 1 des Weiteren dargestellt ist, sind bei der elektrischen Maschine 1 Spannelemente 19 vorgesehen zum Verspannen der Wellenteile 12 und 13 und der dazwischen angeordneten Magnetelemente 5 und der Trägerplatte 18 des Rotors miteinander in axialer Richtung. Die Spannelemente 19 sind dabei in dem in Fig. 1 gezeigten Ausführungsbeispiel z.B. an den beiden äußeren Enden der Laufräder 8, 9 auf der Verbindungsstange 20 angeordnet und einstellbar, um eine geeignete Vorspannung einzustellen. Als Spannelemente können beispielsweise Spannscheiben oder jede anderen geeigneten Spannelemente vorgesehen werden.

Die axialen Trägerplatten 18 sind an den Enden der Magnetelemente 5 derart angeordnet, dass durch die auf der Verbindungsstange 20 vorgesehenen Spannelemente 19 eine entsprechend in axialer Richtung generierte und geleitete mechanische Vorspannung bereitgestellt werden kann, welche die Aufnahme und radiale Positionierung der Magnetelemente 5 gewährleistet.

Die in erster Linie für die Halterung und Positionierung der Magnetelemente 5 konzipierten axialen Trägerplatten 18 können des Weiteren die folgende zusätzliche Funktion haben. Im Falle, dass die Trägerplatten 18 aus einem Material mit entsprechend ausgewählten magnetischen Eigenschaften ausgebildet werden, können sie zusätzlich einen Teil des Streuflusses an beiden Rändern der Magnetelemente 5 abfangen. Dadurch gelangen die schnell rotierenden magnetischen Felder nicht in die nahe gelegenen stationären Konstruktionselemente der elektrischen Maschine 1. Hierdurch werden Zusatzverluste und die Erwärmung der elektrischen Maschine 1 reduziert. Die Trägerplatten 18 können dazu beispielsweise aus einem nicht magnetischen Material oder Materialkombination hergestellt werden, wie z.B. aus Stahl oder aus einem anderen nicht magnetischen Metall oder nicht magnetischen Metalllegierung.

Die Welle 6 ist mittels Radiallagern 24 gelagert, welche auf jeweils einem der Wellenteile 12, 13 angeordnet sind.

Des Weiteren ist an einem Wellenteil, in Fig. 1 das zweite Wellenteil 12, ein Axiallager 25 vorgesehen. In Fig. 1 ist dabei die Rotationsscheibe des Axiallagers 25 dargestellt. Das Axiallager 25 ist beispielsweise ein herkömmliches Gaslager, z.B. ein dynamisches Gaslager. Grundsätzlich kann jedes Axiallager eingesetzt werden, welches zur Lagerung des Wellenteils der elektrischen Maschine 1 geeignet ist.

Die beiden Laufräder 8, 9 sind fest mit der Verbindungsstange 20 der elektrischen Maschine und dem Rotor 4 durch die Spannelemente 19 verbunden.

Die Verbindungsstange 20 kann beispielsweise aus einem Kohlefasermaterial hergestellt sein. Es kann jedes Material eingesetzt werden, welches für die Verbindungsstange 20 geeignet ist.

Die Passung zwischen der Verbindungsstange 20 und den Wellenteilen 12, 13 kann derart gewählt werden, dass eine relative Verschiebung zwischen der Verbindungsstange 20 und den Wellenteilen 12, 13 oder ein Schiebesitz der Wellenteile 12, 13 auf der Verbindungsstange 20 vorzugsweise im gesamten Temperaturbereich oder Betriebstemperaturbereich möglich ist.

Die Verbindungsstange 20 ist beispielsweise aus einem Material mit einer guten oder möglichst großen mechanischen Stabilität und Festigkeit und weist vorzugsweise einen möglichst niedrigen thermischen Ausdehnungskoeffizienten auf. Wie zuvor beschrieben kann die Verbindungsstange 20 beispielsweise aus einem Kohlefasermaterial oder einem anderen geeigneten Faserverbundwerkstoff hergestellt sein oder dieses zumindest aufweisen. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Die schnelllaufende Maschine, z.B. Synchronmaschine, wie sie zuvor mit Bezug auf Fig. 1 beispielhaft beschrieben wurde, weist den Rotor 4 oder sogenannten Mittel-Rotor zwischen der zweiteiligen Welle 6 mit den zwei Wellenteilen 12 und 13 auf. Die beiden Wellenteile 12 und 13 sind durch die folgenden Mittel zu einer sehr stabilen Rotorkonstruktion verbunden. Eines der Mittel ist dabei die zuvor beschriebene Hülse 16, welche auf die beiden Wellenteile 12, 13 z.B. aufgepresst sein kann. Ein weiteres Mittel sind die vorgespannte Verbindungsstange 20 und die axialen Trägerplatten 18, die die Magnetelemente 5, insbesondere Permanentmagnete, in axialer Richtung aufnehmen und in axialer Richtung vorspannen.

Die Konstruktion des Rotors der elektrischen Maschine 1 hat den Vorteil, dass die strukturelle Festigkeit und Steifigkeit bei einer möglichst maximalen aktiven Masse der Magnetelemente 5 vergrößert und damit eine maximal erreichbare Energiedichte der Maschine 1 erzielt werden kann. Weiter kann die Steifigkeit durch die Einstellung der Zugkraft an der Verbindungsstange 20 eingestellt werden. Die Verbindungsstange 20 oder -stab arbeitet auf Zug. Dies hat einen großen Einfluss auf das Vergrößern der Steifigkeit bei einer nur sehr kleinen Zusatzmasse und einem vernachlässigbaren Zusatz-Trägheitsmoments des Rotors 4. Des Weiteren erfolgt keine wesentliche Reduzierung der aktiven Magnetmasse Vm, wobei für die Magnetmasse Vm gilt:

$$V_m = \frac{\pi}{4}(Dm^2 - Dst^2) \cdot Lm$$

Wobei Dst<<Dm

Vm : Magnetmasse
Dst: Durchmesser der Verbindungsstange
Dm : Magnetdurchmesser
Lm : Magnetlänge

Die Verbindungsstange 20 weist beispielsweise eine zylindrische Form auf oder zumindest einen zylindrischen Abschnitt mit dem Durchmesser Dst.

Fig. 2 zeigt ebenfalls die Grundanordnung von elektromagnetischen, aktiven Komponenten der elektrischen Maschine 1, wie dem Stator 2 mit Wicklungen 3, dem Rotor 4 mit Magnetelementen 5, die Welle 6 und die Lagerelemente 7 des Rotors 4. Die Darstellung in Fig. 2 wie zuvor in Fig. 1 dabei rein schematisch, stark vereinfacht und nicht maßstäblich.

Die Maschine 1 bildet in dem Fig. 2 gezeigten Ausführungsbeispiel der Erfindung ebenfalls den Antrieb eines zweistufigen Kompressors oder Verdichters. Die Laufräder 8 und 9 von beiden Verdichterstufen der elektrischen Maschine 1 sind auf gegenüberliegenden Seiten des Motors angeordnet. Ihre Gegenstücke, die Gehäuse oder Voluten 10, 11 sind in Fig. 2 im Gegensatz zu Fig. 1 ebenfalls dargestellt.

Die in Fig. 2 gezeigte erfindungsgemäße elektrische Maschine 1 weist im Wesentlichen denselben Aufbau und insbesondere denselben Rotor 4 auf, so dass hierzu auf die Ausführungen zuvor in Fig. 1 Bezug genommen wird, um unnötige Wiederholungen zu vermeiden. Die elektrische Maschine gemäß Fig. 2 unterscheidet sich von der gemäß Fig. 1 lediglich dadurch, dass sie ein nachfolgend beschriebenes Kompensationselement 29 und eine Temperatur-Ausgleichseinrichtung 30 aufweist.

Wie in Fig. 2 gezeigt ist, weist die elektrische Maschine 1 eine zweiteilige Welle 6 oder zweiteilige Motorwelle mit einem ersten Wellenteil 12 und einem zweiten Wellenteil 13 auf. Die beiden ersten und zweiten Wellenteile 12 und 13 sind auf einer gemeinsamen Verbindungsstange 20 angeordnet, deren Längsachse gleichzeitig auch die Rotationsachse 21 der Welle 6 und ihrer Wellenteile 12, 13 bildet. An dem jeweiligen äußeren Ende 22, 23 des ersten und zweiten Wellenteils 12 bzw. 13 ist in dem in Fig. 2 gezeigten Ausführungsbeispiel jeweils das Laufrad oder sog. Impeller 8 bzw. 9 angeordnet.

Zur Ausbildung des Rotors 4 für eine elektrische Maschine 1, wie sie in Fig. 2 beispielhaft gezeigt ist, sind zwischen den beiden inneren Enden 14, 15 der Wellenteile 12 und 13, wie zuvor mit Bezug auf Fig. 1 beschrieben, ein oder mehrere Magnetelemente 5 um die Verbindungsstange 20 angeordnet, z.B. radial angeordnet.

Des Weiteren ist die zuvor mit Bezug auf Fig. 1 beschriebene Rotor-Verbindungshülse oder Hülse 16, vorgesehen, die sich zumindest über einen jeweiligen Abschnitt der inneren Enden 14, 15 des ersten und zweiten Wellenteils 12 und 13 und über die dazwischen angeordneten Magnetelemente 5 erstreckt.

Außen um die Hülse 16 ist der Stator 2 mit seinen Statorwicklungen 3 angeordnet. Wahlweise zusätzlich kann, wie in dem Beispiel in Fig. 1 mit einer gepunkteten Linie angedeutet ist, das zuvor mit Bezug auf Fig. 1 beschriebene elastische Ausgleichselement 17 zwischen der Innenseite der Hülse 16 und der Außenseite der einen oder mehreren Magnetelemente 5 vorgesehen sein.

Des Weiteren ist wahlweise zusätzlich eine zuvor bereits mit Bezug auf Fig. 1 beschriebene Trägerplatte 18 zwischen dem jeweiligen inneren Enden 14, 15 des Wellenteils 12 bzw. 13 und den gegenüberliegenden Enden der Magnetelemente 5 vorgesehen. Die Trägerplatten 18 werden dabei auf die Verbindungsstange 20 aufgeschoben. Wie in Fig. 2 dargestellt ist, sind außerdem Spannelemente 19 vorgesehen zum Verspannen der Wellenteile 12 und 13 und der dazwischen angeordneten Magnetelemente 5 und der Trägerplatte 18 miteinander in axialer Richtung. Die Spannelemente 19 sind dabei in dem in Fig. 2 gezeigten Ausführungsbeispiel z.B. an den beiden äußeren Enden der Laufräder 8, 9 auf der Verbindungsstange 20 angeordnet und einstellbar, um eine geeignete Vorspannung einzustellen. Als Spannelemente können beispielsweise Spannscheiben oder jede anderen geeigneten Spannelemente vorgesehen werden.

Die axialen Trägerplatten 18 sind an den Enden der Magnetelemente 5 derart angeordnet, dass durch die auf der Verbindungsstange 20 vorgesehenen Spannelemente 19 eine entsprechend in axialer Richtung generierte und geleitete mechanische Vorspannung bereitgestellt werden kann, welche die Aufnahme und radiale Positionierung der Magnetelemente 5 gewährleistet.

Die Welle 6 ist mittels Radiallagern 24 gelagert, welche auf jeweils einem der Wellenteile 12, 13 angeordnet sind.

Des Weiteren ist an einem Wellenteil, in Fig. 2 das erste Wellenteil 12, ein Axiallager 25 vorgesehen. In Fig. 2 ist dabei die Rotationsscheibe des Axiallagers 25 dargestellt. Das Axiallager 25 ist beispielsweise ein herkömmliches Gaslager, z.B. ein dynamisches Gaslager. Die Erfindung ist jedoch nicht auf ein herkömmliches Gaslager als Axiallager beschränkt. Grundsätzlich kann jedes Axiallager eingesetzt werden, welches zur Lagerung des Wellenteils der elektrischen Maschine 1 geeignet ist.

Durch das Axiallager 25 in Form vorzugsweise eines Gaslagers ist ein erster Luftspalt 26 zwischen dem ersten Laufrad 8 und dem ersten Gehäuse 10 bzw. der Volute aufgrund der hohen Genauigkeit des Gaslagers relativ gut eingestellt und kann konstant gehalten werden. Der erste Luftspalt 26 ist durch das Axiallager 25 hierbei nur wenig von einer Temperaturentwicklung im Betrieb der elektrischen Maschine 1 betroffen.

Auf der anderen Seite der Welle 6 wäre es jedoch sehr schwer den für die Funktion des Kompressors bzw. Verdichters, seine Stabilität und seinen Wirkungsgrad wichtigen zweiten Luftspalt 27 zu beherrschen, d.h. konstant zu halten. Der zweite Luftspalt 27 ist dabei ebenfalls der Luftspalt zwischen dem zweiten Laufrad 9 und dem zweiten Gehäuse 11 bzw. Volute.

In dem in Fig. 2 gezeigten erfindungsgemäßen Ausführungsbeispiel der elektrischen Maschine mit ihrem Rotor 4 erfolgt eine thermische Kompensation der Ausdehnung der Wellenteile 12, 13 des Kompressors bzw. Verdichters. Damit können solche Kompressoren bzw. Verdichter in einem viel breiteren Temperaturbereich arbeiten.

Die beiden Laufräder 8, 9 sind fest mit der Verbindungsstange 20 verbunden und ihre Position ist durch die Verbindungsstange 20 und ein Federelement 28 gesichert. Das Federelement 28 als Teil einer thermischen Kompensationseinrichtung wird im Folgenden noch näher beschrieben.

Die Verbindungsstange 20 kann beispielsweise aus einem Kohlefasermaterial hergestellt sein. Die Erfindung ist jedoch nicht auf Kohlefasermaterial oder ein anderes Fasermaterial für die Verbindungsstange 20 beschränkt. Es kann jedes Material eingesetzt werden, welches für die Verbindungsstange 20 geeignet ist.

Die Passung zwischen der Verbindungsstange 20 und den Wellenteilen 12, 13 kann derart gewählt werden, dass eine relative Verschiebung zwischen der Verbindungsstange 20 und den Wellenteilen 12, 13 oder ein Schiebesitz der Wellenteile 12, 13 auf der Verbindungsstange 20 vorzugsweise im gesamten Temperaturbereich oder Betriebstemperaturbereich möglich ist. Dadurch kann der zweite Luftspalt 27 zwischen dem zweiten Laufrad 9 und dem zweiten Gehäuse bzw. der Volute 11 konstant gehalten werden, auch in dem Fall, wenn sich die Elemente, wie die beide Wellenteile 12 und 13, die Magnetelemente 5 und die axialen Trägerplatten 18 relativ stark ausdehnen.

Dies ist möglich mittels eines vorgespannten, ringförmigen elastischen Kompensationselements 29. Dieses bildet zusammen mit dem Federelement 28 die thermische Kompensationseinrichtung 30.

Die Verbindungsstange 20 ist dabei beispielsweise aus einem Material mit einer guten oder möglichst großen mechanischen Stabilität und Festigkeit und weist vorzugsweise einen möglichst niedrigen thermischen Ausdehnungskoeffizienten auf. Wie zuvor beschrieben kann die Verbindungsstange 20 beispielsweise aus einem Kohlfasermaterial oder einem anderen geeigneten Faserverbundwerkstoff hergestellt sein oder dieses zumindest aufweisen. Das Material der Verbindungsstange 20 ist aber nicht auf einen Faserverbundwerkstoff oder Kohlefasermaterial beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Das vorgespannte, elastische Kompensationselement 29 weist eine Steifigkeit auf, die derart ausgewählt ist, dass das Kompensationselement 29 die Ausdehnungs-Differenzen zwischen der Verbindungsstange 20 und den restlichen Elementen des Rotors 4, d.h. den Wellenteilen 12, und 13, den axialen Trägerplatten 18, der Hülse 16, den Magnetelementen 5, dem Federelement 28, den Befestigungs- bzw. Spannelementen 19, den beiden Laufräder 8, 9, geeignet ausgleichen kann.

Alternativ kann das Kompensationselement 29 auch aus einem Material mit einem negativen thermischen Ausdehnungskoeffizienten hergestellt sein, welcher mit dem Rest der Konstruktion des Rotors 4 und der elektrischen Maschine 1 abgestimmt ist. Dadurch wird eine temperaturbedingte Ausdehnung des Rotors 4 minimiert oder ganz kompensiert. Der Bezugspunkt der temperaturbedingten Ausdehnung ist dabei der erste Luftspalt 26 des Axiallagers 25 an dem ersten Wellenteil 12 auf der rechten Seite in Fig. 1.

Wie in Fig. 2 gezeigt ist, ist zwischen dem äußeren Ende des anderen Wellenteils, hier dem zweiten Wellenteil 13 in Fig. 2, und dem gegenüberliegenden Laufrad 9 das zusätzliche elastische Kompensationselement 19 vorgesehen.

Des Weiteren ist das Federelement 28 auf der Verbindungstange 20 angeordnet. Das Federelement 28 ist dabei in einer Aussparung 31 in dem äußeren Ende 23 des zweiten Wellenteils 13 in Fig. 2 zwischen dem zweiten Laufrad 9 und dem zweiten Wellenteil 13 angeordnet. Als Federelement 28 kann beispielsweise ein Metallring mit einem Außengewinde und/oder Innengewinde vorgesehen werden, zum Schrauben des Metallrings mit seinem Außengewinde in ein Innengewinde in der Aussparung des Wellenteils bzw. zum Schrauben des Metallrings mit seinem Innengewinde auf ein Außengewinde der Verbindungsstange 20. Ebenso kann als Federelement 28 wenigstens eine Federscheibe, z.B. eine gewellte Federscheibe, und/oder wenigstens ein Spannring usw. verwendet werden. Die Erfindung ist jedoch auf die genannten Beispiele für das Federelement 28 nicht beschränkt. Es kann jedes Federelement verwendet werden, welches wenigstens eine axiale Federung des Wellenteils und/oder des zugeordneten Laufrads erlaubt und für die elektrische Maschine 1 geeignet ist.

In dem in Fig. 2 gezeigten erfindungsgemäßen Ausführungsbeispiel ist das Kompensationselement 29 ringförmig um das Federelement 28 zwischen dem äußeren Ende 23 des zweiten Wellenteils 13 und dem Laufrad 9 angeordnet.

Die Übertragung des Drehmoments oder Motordrehmoments von dem Motor der elektrischen Maschine 1 auf die Laufräder 8, 9 geschieht zum größten Teil über das Kompensationselement 29. Die Übertragungskraft zum Übertragen des Drehmoments des Motors auf die Laufräder 8, 9 mittels des Kompensationselements 29 kann beispielsweise in einem ersten Fall durch Reibung zwischen dem Kompensationselement 29 und dem Wellenteil 13 auf der einen Seite und dem Kompensationselement 29 und dem Laufrad 9 auf der anderen Seite realisiert werden oder in einem zweiten Fall durch einen drehzahlabhängigen Formschluss (Mitnehmer) zwischen dem Kompensationselement 29 und dem Wellenteil 13 auf der einen Seite und dem Kompensationselement 29 und dem Laufrad 9 auf der anderen Seite realisiert werden. In dem ersten Fall muss die Vorspannung oder Anpresskraft des Kompensationselements 29 auf das Wellenteil 13 und das Laufrad 9 derart gewählt sein, dass bei jeder Betriebsbedingung und damit bei jeder damit verbundenen Temperatur, das Drehmoment, welches sich aus der Anpresskraft des Kompensationselements 29 gegen das Laufrad 9 und gegen das Wellenteil 13 und der damit verbundenen Reibung ergibt, größer ist als das zu übertragende Motordrehmoment. Zu dem zu übertragenden Motordrehmoment gehören auch dynamische Motordrehmomente, wie beispielsweise eine Motordrehmomentbeschleunigung oder Beschleunigung des Antriebes.

Die Genauigkeit der thermischen Kompensation kann dadurch erhöht werden, dass die zu erwartende Temperatur der Elemente des Stators 2 oder die Stator-Komponenten, d.h. der Stator 2 mit seinen Wicklungen 3, einschließlich dem zweiten Gehäuse 11 bzw. Volute, welche den zweiten Luftspalt 27 mit dem Laufrad 9 bildet, berücksichtigt wird bei der Auswahl des Materials der Verbindungsstange 20. Dabei werden insbesondere die thermischen Ausdehnungskoeffizienten der Elemente des Stators 2 sowie des zweiten Gehäuses 11 bei der Auswahl des Materials und des damit verbundenen thermischen Ausdehnungskoeffizienten der Verbindungsstange 20 berücksichtigt.

Wie zuvor mit Bezug auf Fig. 1 beschrieben wurde weist die schnelllaufende Maschine, z.B. Synchronmaschine, den Rotor 4 oder sogenannten Mittel-Rotor zwischen der zweiteiligen Welle 6 mit den zwei Wellenteilen 12 und 13 auf. Die beiden Wellenteile 12 und 13 sind durch die folgenden Mittel zu einer sehr stabilen Rotorkonstruktion verbunden. Eines der Mittel ist dabei die Hülse 16, welche auf die beiden Wellenteile 12, 13 z.B. aufgepresst sein kann. Die weiteren Mittel sind die vorgespannte Verbindungsstange 20 und die axialen Trägerplatten 18, die die Magnetelemente 5, insbesondere Permanentmagnete, in axialer Richtung aufnehmen und in axialer Richtung vorspannen.

Ein weiteres besonderes Mittel ist bei dem in Fig. 2 gezeigten Ausführungsbeispiel das Kompensationselement 29.

So kann eine thermische Kompensation der axialen Ausdehnung des Rotors 4 außerdem in dem Ausführungsbeispiel in Fig. 2 erreicht werden, vor allem des axialen Spiels zwischen dem Gehäuse 10, 11 bzw. der Volute und dem Laufrad 8, 9 bzw. dem Impeller, auf der dem Axiallager 25 gegenüberliegenden Motorseite der Maschine 1.

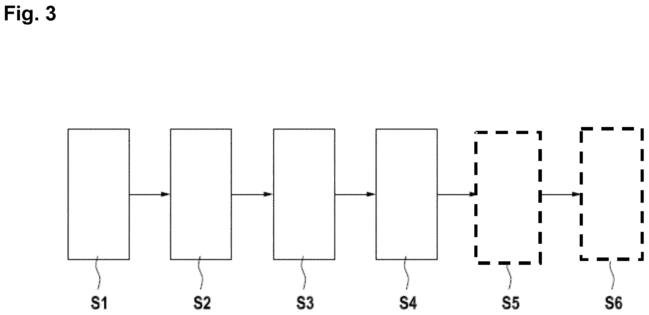

In Fig. 3 ist ein Flussdiagramm zur Herstellung der zuvor beispielhaft mit Bezug auf Fig. 1 und 2 beschriebenen Rotoren dargestellt.

Zur Herstellung des Rotors wird in einem ersten Schritt S1 die Hülse zur Aufnahme des wenigstens einen Magnetelements bereitgestellt. Dabei kann die Hülse an ihrem Innenumfang oder das jeweilige Magnetelement an seinem Außenumfang optional mit dem Ausgleichselement versehen werden, bevor das Magnetelement anschließend in die Hülse eingeführt wird.

In einem nächsten Schritt S2 wird das wenigstens eine Magnetelement in die Hülse eingeführt, dabei kann optional die erste von zwei Trägerplatten zuvor in die Hülse eingeführt werden, bevor anschließend das wenigstens eine Magnetelement in die Hülse eingesetzt wird.

In einem weiteren Schritt S3 werden die Trägerplatten an den äußeren Enden der Magnetanordnung angeordnet. Sofern bereits eine der Trägerplatten bereits in der Hülse positioniert wurde, wird lediglich die zweite verbleibende Trägerplatte ebenfalls in der Hülse angeordnet.

Die Verbindungsstange kann dabei im Anschluss an den Schritt S2 in die durch das wenigstens eine Magnetelement gebildete Durchführung und, falls bereit eingesetzt, durch die Öffnung der Trägerplatten hindurchgeführt werden. Ebenso kann erst im Anschluss an den Schritt S3 in einem Schritt S3* die Verbindungsstange durch die Öffnung der Trägerplatten und die Durchführung des wenigstens einen Magnetelements hindurchgeführt werden.

In einem nächsten Schritt S4 werden die beiden Wellenteile mit ihren inneren Enden in den zugeordneten Enden der Hülse befestigt.

Im Falle einer segmentierten Bauweise, bei welcher beispielsweise wenigstens zwei Magnetelemente 5 z.B. in Form von Magnetstäben, radial um einen Außenumfangsabschnitt der Verbindungsstange 20 in Schritt S2 angeordnet werden, kann die Hülse an ihrem Innenumfang mit einer beispielsweise umlaufenden Nut ausgebildet sein, wie zuvor in Fig. 1 und 2 gezeigt ist. In diesem Fall werden zunächst die einzelnen Magnetstäbe in die Hülse eingeführt und in die Nut eingesetzt. Die Magnetelemente bilden dabei mit ihren Innenumfangsflächen eine Durchgangsöffnung, durch welche anschließend die Verbindungsstange hindurchgeführt werden kann. Dabei können die Nut auf ihrer Innenumfangsfläche und/oder die Magnetelemente auf ihrer Außenumfangsfläche wahlweise zusätzlich mit dem zuvor mit Bezug auf Fig. 1 und 2 beschriebenen Ausgleichselement versehen sein. Anschließend werden die Magnetelemente in die Nut in der Hülse eingesetzt und die Verbindungsstange durch die Durchgangsöffnung, welche von den Magnetelementen gebildet wird, hindurchgeschoben. Die Trägerplatten an den beiden Enden der Magnetelemente sind im Falle der Nut ebenfalls segmentiert ausgebildet um in die Nut an den beiden Enden der Magnetelemente eingesetzt zu werden, wie in dem Ausführungsbeispiel in Fig. 1 gezeigt ist.

Statt einer segmentierten Bauweise kann auch wenigstens ein hülsenförmiges oder scheibenförmiges Magnetelement vorgesehen werden. In diesem Fall ist zum Einschieben des Magnetelements in die Hülse in Schritt S2, die Hülse zumindest auf einer Einführungsseite mit einem Innendurchmesser ausgebildet, welcher an den Außendurchmesser des hülsenförmiges oder scheibenförmiges Magnetelements derart angepasst ist, dass das Magnetelement in die Hülse eingeschoben werden kann. Die Hülse kann dabei im Inneren mit einem Absatz ausgebildet sein, bis zu dem das Magnetelement einschiebbar ist. Dabei kann die Innenumfangsfläche im Bereich zumindest der Endposition des Magnetelements innerhalb der Hülse und/oder das Magnetelement auf seiner Außenumfangsfläche wahlweise zusätzlich mit dem zuvor mit Bezug auf Fig. 1 und 2 beschriebenen Ausgleichselement versehen sein. Die Trägerplatten, welche an den beiden Enden des wenigstens einen hülsenförmigen oder scheibenförmigen Magnetelements positioniert werden, können dabei, wie zuvor beschrieben, scheibenförmig ausgebildet sein und in ihrem Außendurchmesser an den zugeordneten Innendurchmesser der Hülse angepasst sein zum Einschieben in die Hülse und Positionieren an dem jeweils zugeordneten Ende des Magnetelements. Grundsätzlich können auch mehrere hülsenförmige oder scheibenförmige Magnetelemente hintereinander in einer Reihe angeordnet werden. Die beiden Trägerplatten werden in diesem Fall an den beiden äußeren Enden der Magnetanordnung angeordnet.

Das Magnetelement, insbesondere das hülsenförmige oder scheibenförmige Magnetelement, kann radial oder diamaterial magnetisiert ausgebildet sein. Dies gilt für alle Ausführungsformen der Erfindung.

Das Aushärten des für das Ausgleichselement verwendete Harz kann beispielsweise je nach verwendetem Harz vor und/oder nach dem Positionieren des wenigstens einen Magnetelements in der Hülse erfolgen.

Zum Herstellen einer elektrischen Maschine, wie sie zuvor mit Bezug auf Fig. 2 beschrieben wurde, mit dem Rotor, wird in einem anschließenden zusätzlichen Schritt S5 nach dem Verbinden der Wellenteile mit der Hülse das Federelement in der Aussparung des einen Wellenteils angeordnet und das Kompensationselement um das Federelement angeordnet. Anschließend werden in einem Schritt S6 die beiden Laufräder auf der Verbindungsstange angeordnet und schließlich die Laufräder und die zwischen den Laufrädern angeordneten Elemente durch die Spannelemente in einem Schritt S7 gegeneinander in axialer Richtung verspannt.

Die radiale und axiale Lagerung der Welle mittels wenigstens zwei Radiallagern und wenigstens einem Axiallager können in einem geeigneten der zuvor beschriebenen Schritte vorgesehen werden.

## Patentansprüche

1. Elektrische Maschine (1) mit einem Rotor (4), wobei die elektrische Maschine (1) einen Stator (2) aufweist, welcher um den Rotor (4) angeordnet ist, wobei der Rotor wenigstens ein Magnetelement (5) und eine Hülse (16), welche derart ausgebildet ist, dass das wenigstens eine Magnetelement (5) in die Hülse einführbar ist, aufweist, wobei die elektrische Maschine (1) eine zweigeteilte Welle (6) mit einem ersten und zweiten Wellenteil (12, 13) aufweist, wobei der Rotor (4) zwischen den beiden Wellenteilen (12, 13) angeordnet und mit den beiden Wellenteilen (12, 13) fest verbunden ist, wobei das wenigstens eine in der Hülse (16) aufgenommene Magnetelement (5) eine Durchführung bildet zum Hindurchführen einer Verbindungsstange (20) der elektrischen Maschine (1) durch die Hülse (16) hindurch,

   wobei die elektrische Maschine (1) ein erstes und zweites Laufrad (8, 9) und die Verbindungsstange (20) aufweist, welche durch die Durchführung des Rotors (4) und durch Durchführungen der beiden Wellenteile (12, 13) hindurchgeführt ist,
   wobei die beiden Laufräder (8, 9) fest mit der Verbindungsstange (20) und dem Rotor (4) durch Spannelemente (19) verbunden sind, **dadurch gekennzeichnet, dass** das erste und zweite Laufrad (8, 9), an den Enden der Verbindungsstange (20) dem jeweils zugeordneten ersten und zweiten Wellenteil (12, 13) gegenüberliegend angeordnet sind, und dass eine thermische Kompensationseinrichtung (30) zwischen wenigstens einem der Wellenteile (13) und seinem zugeordneten Laufrad (9) vorgesehen ist zur Kompensation einer Ausdehnung der ersten und zweiten Wellenteile (12, 13) und des dazwischen angeordneten Rotors (6) in axialer Richtung.

2. Elektrische Maschine (1) nach Anspruch 1, **dadurch gekennzeichnet, dass** das wenigstens eine Magnetelement (5) ein Magnetstab, eine Magnetscheibe oder eine Magnethülse ist.

3. Elektrische Maschine (1) nach einem der vorstehenden Ansprüche, **dadurch gekennzeichnet, dass** das wenigstens eine Magnetelement (5) radial oder diametral magnetisiert ausgebildet ist.

4. Elektrische Maschine (1) nach einem der vorstehenden Ansprüche, **dadurch gekennzeichnet, dass** die Hülse (16) aus Metall, Kunststoff und/oder faserverstärktem Kunststoff ausgebildet ist und mit einem konstanten Innendurchmesser, einer Nut (32) oder einem Absatz zur Aufnahme des wenigstens einen Magnetelements (5) ausgebildet ist.

5. Elektrische Maschine (1) nach einem der vorstehenden Ansprüche, **dadurch gekennzeichnet, dass** an der Innenumfangsfläche der Hülse (16) und/oder an der Außenumfangsfläche des wenigstens einen Magnetelements (5) ein zumindest teilweise elastisches Ausgleichselement (17) vorgesehen ist, wobei das Ausgleichselement (17) vorzugsweise eine Ausgleichsschicht ist, welche insbesondere aus einem Harz besteht, welches nach dem Aushärten zumindest teilweise elastisch ist.

6. Elektrische Maschine (1) nach einem der vorstehenden Ansprüche, **dadurch gekennzeichnet, dass** an einem oder beiden Enden des wenigstens einen Magnetelementes (5) in der Hülse (16) jeweils eine Trägerplatte (18) vorgesehen ist, wobei die Trägerplatte (18) eine axiale Aufnahme für das wenigstens eine Magnetelement (5) bildet und wobei die Trägerplatte (18) segmentiert oder als Scheibe mit einer Durchgangsbohrung ausgebildet ist.

7. Elektrische Maschine (1) nach Anspruch 6, **dadurch gekennzeichnet, dass** die wenigstens eine Trägerplatte (18) aus einem nicht magnetischen Material oder einer nicht magnetischen Materialkombination hergestellt ist.

8. Elektrische Maschine (1) nach einem der vorhergehenden Ansprüche, **dadurch gekennzeichnet, dass** die Hülse (16) mit einem Ende eines Wellenteils (12, 13) der elektrischen Maschine (1) verbindbar ist, insbesondere durch Aufschrumpfen oder Aufpressen auf das Wellenteil (12, 13).

**Claims**

1. Electrical machine (1) comprising a rotor (4), wherein the electrical machine (1) has a stator (2) which is arranged around the rotor (4), wherein the rotor has at least one magnetic element (5) and one sleeve (16) which is designed in such a way that the at least one magnetic element (5) can be inserted into the sleeve, wherein the electrical machine (1) has a shaft (6) which is divided into two and has a first and a second shaft part (12, 13), wherein the rotor (4) is arranged between the two shaft parts (12, 13) and is fixedly connected to the two shaft parts (12, 13), wherein the at least one magnetic element (5) which is received in the sleeve (16) forms a bushing for guiding a connecting rod (20) of the electrical machine (1) through the sleeve (16), wherein the electrical machine (1) has a first and a second impeller (8, 9) and the connecting rod (20) which is guided through the bushing of the rotor (4) and through bushings of the two shaft parts (12, 13), wherein the two impellers (8, 9) are fixedly connected to the connecting rod (20) and to the rotor (4) by clamping elements (19), **characterized in that** the first and the second impeller (8, 9) are arranged at the ends of the connecting rod (20) in a manner situated opposite the respectively associated first and second shaft parts (12, 13), and **in that** a thermal compensation device (30) is provided between at least one of the shaft parts (13) and its associated impeller (9) for compensating for an expansion of the first and second shaft parts (12, 13) and the rotor (6), which is arranged between them, in the axial direction.

2. Electrical machine (1) according to Claim 1, **characterized in that** the at least one magnetic element (5) is a magnetic bar, a magnetic disc or a magnetic sleeve.

3. Electrical machine (1) according to either of the preceding claims, **characterized in that** the at least one magnetic element (5) is of radially or diametrically magnetized design.

4. Electrical machine (1) according to one of the preceding claims, **characterized in that** the sleeve (16) is formed from metal, plastic and/or fibre-reinforced plastic and is designed with a constant inside diameter, a groove (32) or an offset for receiving the at least one magnetic element (5).

5. Electrical machine (1) according to one of the preceding claims, **characterized in that** an at least partially elastic compensation element (17) is provided on the inner circumferential surface of the sleeve (16) and/or on the outer circumferential surface of the at least one magnetic element (5), wherein the compensation element (17) is preferably a compensation layer which consists, in particular, of a resin which is at least partially elastic after curing.

6. Electrical machine (1) according to one of the preceding claims, **characterized in that** a carrier plate (18) is respectively provided at one or both ends of the at least one magnetic element (5) in the sleeve (16), wherein the carrier plate (18) forms an axial receptacle for the at least one magnetic element (5) and wherein the carrier plate (18) is of segmented design or is designed as a disc with a passage bore.

7. Electrical machine (1) according to Claim 6, **characterized in that** the at least one carrier plate (18) is produced from a non-magnetic material or a non-magnetic material combination.

**8.** Electrical machine (1) according to one of the preceding claims, **characterized in that** the sleeve (16) can be connected to one end of a shaft part (12, 13) of the electrical machine (1), in particular by being shrink-fitted or pressed onto the shaft part (12, 13).

**Revendications**

**1.** Machine électrique (1) pourvue d'un rotor (4), la machine électrique (1) comportant un stator (2) disposé autour du rotor (4), le rotor comportant au moins un élément magnétique (5) et un manchon (16) qui est conçu de manière que l'au moins un élément magnétique (5) puisse être inséré dans le manchon, la machine électrique (1) comportant un arbre (6) en deux parties pourvu d'une première et d'une deuxième partie d'arbre (12, 13), le rotor (4) étant disposé entre les deux parties d'arbre (12, 13) et relié de manière fixe aux deux parties d'arbre (12, 13), l'au moins un élément magnétique (5), logé dans le manchon (16), formant un passage permettant à une barre de liaison (20) de la machine électrique (1) de passer à travers le manchon (16), la machine électrique (1) comportant une première et une deuxième roue à aubes (8, 9) et la barre de liaison (20), qui est passée à travers le passage du rotor (4) et à travers des passages des deux parties d'arbre (12, 13), les deux roues à aubes (8, 9) étant reliées de manière fixe à la barre de liaison (20) et au rotor (4) par des éléments de serrage (19), **caractérisée en ce que** la première et la deuxième roue à aubes (8, 9) sont disposées aux extrémités de la barre de liaison (20) en regard des première et deuxième parties d'arbre (12, 13) respectivement associées, et **en ce qu'**un dispositif de compensation thermique (30) est prévu entre l'une au moins des parties d'arbre (13) et sa roue à aubes associée (9) pour compenser une dilatation des première et deuxième parties d'arbre (12, 13) et du rotor (6) disposé entre celles-ci dans une direction axial.

**2.** Machine électrique (1) selon la revendication 1, **caractérisée en ce que** l'au moins un élément magnétique (5) est une tige magnétique, un disque magnétique ou un manchon magnétique.

**3.** Machine électrique (1) selon l'une des revendications précédentes, **caractérisée en ce que** l'au moins un élément magnétique (5) est réalisé de manière à être aimanté radialement ou diamétralement.

**4.** Machine électrique (1) selon l'une des revendications précédentes, **caractérisée en ce que** le manchon (16) est en métal, en matière synthétique et/ou en matière synthétique renforcée de fibres et est conçu avec un diamètre intérieur constant, une gorge (32) ou un épaulement destiné à recevoir l'au moins un élément magnétique (5).

**5.** Machine électrique (1) selon l'une des revendications précédentes, **caractérisée en ce qu'**un élément de compensation (17) au moins partiellement élastique est prévu sur la surface périphérique intérieure du manchon (16) et/ou sur la surface périphérique extérieure de l'au moins un élément magnétique (5), l'élément de compensation (17) étant de préférence une couche de compensation qui est notamment en une résine qui est au moins partiellement élastique après durcissement.

**6.** Machine électrique (1) selon l'une des revendications précédentes, **caractérisée en ce qu'**une plaque de support (18) est prévue dans le manchon (16) à une ou chacune des deux extrémités de l'au moins un élément magnétique (5), la plaque de support (18) formant un logement axial destiné à l'au moins un élément magnétique (5) et la plaque de support (18) étant segmentée ou réalisée sous la forme d'un disque pourvu d'un trou traversant.

**7.** Machine électrique (1) selon la revendication 6, **caractérisée en ce que** l'au moins une plaque de support (18) est réalisée à partir d'une matière amagnétique ou d'une combinaison de matières amagnétiques.

**8.** Machine électrique (1) selon l'une des revendications précédentes, **caractérisée en ce que** le manchon (16) peut être relié à une extrémité d'une partie d'arbre (12, 13) de la machine électrique (1), notamment par rétrécissement ou appui sur la partie d'arbre (12, 13).

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4433261 A
- WO 2007072536 A1